# EUROPEAN PATENT APPLICATION

(11) **EP 2 374 846 A1**
(43) Date of publication of application: **12.10.2011**
(21) Application number: 09837596.7
(22) Date of filing: 25.12.2009
(51) Int. Cl.: C08L 3/02, C08J 9/12, C08K 3/20, C08K 3/26, C08L 23/00, C08L 67/00, C08L 101/00, C08L 101/16

(54) **FOAMABLE RESIN COMPOSITION AND FOAM**

(30) Priority: 06.01.2009 JP 2009001073
(71) Applicant: SHOWA DENKO K.K., Tokyo 105-8518 (JP)
(72) Inventor: KOTANI, Terumitsu, Tokyo 105-8518 (JP); TAKAHASHI, Kei, Tokyo 105-8518 (JP)
(74) Representative: Ahner, Francis
(86) International application number: PCT/JP2009/071612
(87) International publication number: WO 2010/079711

(57) **Abstract**

The foamable resin composition of the present invention is **characterized by** comprising starch, a synthetic resin, an alkaline compound, and water in an amount of 10 to 40 parts by weight with respect to 100 parts by weight of the starch, wherein the synthetic resin content is 0.02 to 10 wt%. The alkaline compound is preferably at least one selected from the group consisting of an alkali metal hydrogen carbonate, an alkali metal carbonate, an alkali earth metal hydrogen carbonate, and an alkali earth metal carbonate. The foam obtained by using the foamable resin composition of the present invention is free from a practical problem such as cushioning properties and the like, and has a cost advantage as an amount of a synthetic resin is extremely small.

## Description

### TECHNICAL FIELD

The present invention relates to a foamable resin composition and to a foam obtained by foaming the foamable resin composition.

### BACKGROUND ART

Foamable resin molded articles are used for packaging material, cushioning material, thermal insulators, or the like. Considering environmental issues and costs, biodegradable resins and starches have been used as materials for them in place of polystyrene.
Patent Literature 1 describes a foam obtained by foaming a composition comprising a starch-based polymer, an ethylene-vinyl acetate copolymer, a surfactant and the like. In addition, Patent Literature 2 describes a foam obtained by foaming a composition comprising a thermoplastic resin, starch, and a compatibilizer.

[Patent Literature 1] Japanese Patent Laid-Open No. 6-87969
[Patent Literature 2] Japanese Patent Laid-Open No. 2004-2613

### SUMMARY OF THE INVENTION

### TECHNICAL PROBLEM

Considering the issue of cost, since starch as a material for a foam is cheaper than resins, it is desirable that starch content be as large as possible. However, in the compositions described in Patent literatures 1 and 2, if the resin content is decreased and the starch content is increased, problems of decreased moldability and reductions in properties of a foam such as cushioning properties and the like occur.
Therefore, in view of the above-mentioned circumstances, an object of the present invention is to provide a foamable resin composition having a cost advantage comprising an extremely small amount of a synthetic resin, and in which the obtained foam is free from practical problems such as cushioning properties and the like.

### SOLUTION TO PROBLEM

The inventors of the present invention have studied the formulations of foamable resin compositions and as a result, found that a foamable resin composition comprising starch, a synthetic resin, an alkaline compound and water is sufficiently useful as a material for a foam, even if the resin content of the composition is reduced much more than with conventional resin compositions, to complete the present invention.
That is, the present invention relates to a foamable resin composition comprising starch, a synthetic resin, an alkaline compound and water in an amount of 10 to 40 parts by weight with respect to 100 parts by weight of the starch, wherein the synthetic resin content is 0.02 to 10 wt%.
The foamable resin composition of the present invention preferably further comprises a surfactant.
In the present invention, the alkaline compound is preferably at least one selected from the group consisting of an alkali metal hydrogen carbonate, an alkali metal carbonate, an alkali earth metal hydrogen carbonate, and an alkali earth metal carbonate.
The foamable resin composition of the present invention preferably comprises 0.05 to 1 wt% of the alkaline compound.
In the present invention, the synthetic resin is preferably at least one selected from the group consisting of aliphatic polyesters, polylactic acid, and polyolefin resins.
In the present invention, the starch is preferably natural starch.
In addition, the present invention relates to a foam, preferably expanded foam obtained by foaming the above-mentioned foamable resin composition.

### ADVANTAGEOUS EFFECTS OF THE INVENTION

According to the present invention, it is possible to provide a foamable resin composition having a cost advantage comprising an extremely small amount of a synthetic resin, and in which the obtained foam is free from practical problems such as cushioning properties and the like. In addition, since the starch content can be greatly increased in the foamable resin composition of the present invention, it is possible to provide a foam product that can be manufactured at low cost and that is environmentally friendly, and hence a product suitable for cushioning material, packaging material, thermal insulators, or the like.

### DESCRIPTION OF THE EMBODIMENTS

The present invention will be explained in detail below. The foamable resin composition of the present invention comprises starch, a synthetic resin, an alkaline compound, and water. In the past, there were problems in actual use of expanded materials whose resin content is reduced, while in the present invention, the cushioning properties and the like of the foam can be maintained at a level at which there is no problem in actual use of the foam by formulating an alkaline compound, if the synthetic resin content is reduced extremely to, for example, 10 wt% or less.

The starch used in the foamable resin composition of the present invention includes natural starch (sometimes called unmodified starch) such as potato starch, corn starch (corn starch, corn grits, and the like), ocarina starch, wheat starch, rice starch, and the like, decomposition products thereof, amylose and amylopectin decomposition products, modified starch, and the like. The modified starch includes oxidized starches such as starch dicarboxylate, esterified starches such as acetylated starch, etherified starches such as carboxymethylated starch, crosslinked starches obtained by treating starch with acetaldehyde or phosphoric acid, cationic starches obtained by tertiary aminating a starch with 2-dimethylaminoethyl chloride, and the like. Among them, natural starch is preferred because it is cheap. Based on the points that mixing the materials when preparing the foamable resin compositions is easy and that workability (in particular, increases in extruded amount, ease of charging the material into an extruder) is excellent, the use of corn grits is preferable. Please note that corn grits are prepared by milling the endosperm portion of corn such that the particle size of the milled endosperm portion is 9 to 60 mesh, in general.

Considering the cost and physical properties of the foamable resin composition of the present invention, the starch content is preferably 75 to 95 wt% with respect to the total composition.

The synthetic resin used in the foamable resin composition of the present invention includes synthesized resins using natural products as starting materials as well as general synthetic resins. The synthetic resins include olefin-based resins such as polypropylene and the like and biodegradable resins such as aliphatic polyesters, polylactic acid, polyvinyl alcohol, and the like. Among them, from the point of reducing load on the environment, a biodegradable resin is preferable. Considering the physical properties, an aliphatic polyester and polylactic acid are more preferable. In addition, considering the physical properties of the obtained foam, a polyolefin-based resin is preferable.
The polyolefin resins include polypropylene, polyethylene, and the like.
The aliphatic polyesters are synthesized from a polyol such as ethylene glycol, 1,4-butanediol, 1,6-hexanediol, or the like and a polybasic acid such as succinic acid, adipic acid, or the like. In addition, the aliphatic polyesters include cyclic aliphatic polyesters synthesized using 1,4-cyclohexanedimethanol as a polyol and aliphatic aromatic polyesters synthesized using 1,4-butanediol, terephthalic acid, and adipic acid.
The polyvinyl alcohol preferably has a saponification value of 90 mol% or higher, more preferably 95 mol% or higher.
The synthetic resin used in the foamable resin composition of the present invention preferably has Melt Flow Rate (MFR) of 5 g/ (190°C, 10 minutes) or higher, more preferably 8 g/(190°C, 10 minutes) or higher. Please note that the MFR is a value determined in accordance with JIS K7210 at 190°C under a 2.16 kg load.

The synthetic resin content in the foamable resin composition of the present invention is preferably 10 wt% or less, with respect to the total composition, considering cost reduction. Considering the balance between cost and the physical properties thereof, the synthetic resin content is more preferably 0.02 to 10 wt%, and most preferably 0.5 to 8 wt%.

The foamable resin composition of the present invention comprises an alkaline compound as an essential component. The alkaline compound imparts viscosity to foamed cells and plays a role in improving the properties of the foam such as cushioning properties and the like. The alkaline compound is not particularly limited, so long as the solution of the alkaline compound in water (including hot water) (preferably, several grams or more thereof is dissolved in 100 g of water at 20°C) is alkalified, but includes alkali metal hydrogen carbonates such as sodium hydrogen carbonate and the like, alkali metal carbonates such as sodium carbonate and the like, alkali earth metal hydrogen carbonates, alkali earth metal carbonates, alkali metal hydroxides such as sodium sesquicarbonate, sodium hydroxide, and the like, ammonia, ammonium hydrogen carbonates, and the like. Among them, considering ease in handling, sodium hydrogen carbonate, sodium sesquicarbonate, and sodium carbonate are preferable.

The alkaline compound content in the foamable resin composition of the present invention is preferably 0.05 to 1 wt% with respect to the total composition.

The foamable resin composition of the present invention comprises water as a foaming agent. Water mainly plays a role in foaming starch. 10 to 40 parts by weight of water with respect to 100 parts by weight of starch is necessary so as to obtain the excellent foam. The amount of water includes water contained in the starch. That is, The amount of water is the sum of added water and water included in the starch.
In addition, weak alkaline electrolyzed water at a pH of about 7.2 to 10 may be used to adjust the viscosity of the foamed cells. This kind of electrolyzed water includes those comprising salt water, an aqueous solution of hydrochloric acid, an aqueous solution of sodium hypochlorite, or the like as an ingredient.

A surfactant may be added to the foamable resin composition of the present invention so as to impart viscosity to foamed cells. Any of anionic surfactants, cationic surfactants, and nonionic surfactants may be used as a surfactant.
The surfactant content is preferably 0.001 to 5 wt%, more preferably 0.01 to 2 wt% with respect to the total composition.

An inorganic filler may be added to the foamable resin composition of the present invention. The inorganic filler plays a role in making the size of foamed cells of a foam much smaller to improve the strength of the foam. Specific examples of the inorganic filler include calcium carbonate, titanium oxide, talc, egg shell, silica, and the like. The particle size of the inorganic filler is not particularly limited. Any inorganic filler having a general particle size used in resin compositions may be used. The inorganic filler content in the foamable resin composition of the present invention is 0.1 to 4.5 wt%, more preferably 0.5 to 3 wt% with respect to the total composition. If the inorganic filler content is less than 0.1 wt%, the strength of a foam may not be increased, while if it is more than 4.5 wt%, the specific gravity of a foam is increased, and thus it is not preferable.

Publicly known additives such as repellent agents, fungicides, plasticizers, stabilizers, antioxidants, ultraviolet absorbing agents, colorants, and the like may be added to the foamable resin composition of the present invention, if necessary. Plasticizers include ethylene glycol, propylene glycol, polyethylene glycol, polypropylene glycol, and the like.

A method for mixing starch, a synthetic resin, an alkaline compound, water, and the components added as necessary such as a surfactant, an inorganic filler, and the like is not particularly limited. In general, a starch powder or starch granules, a synthetic resin, an alkaline compound, water, and the components added as necessary such as a surfactant, an inorganic filler, and the like are pre-mixed by a Henschel mixer or the like, the mixture is heated, pressurized and melted by an extruder such that the mixture is extruded through dies having a desired shape, while the mixture is foamed to directly obtain a foam, and the foam is cut into expanded foam. In addition, after a starch powder or starch granules, a synthetic resin, an alkaline compound, water, and the components added as necessary such as a surfactant, an inorganic filler, and the like are mixed by a Henschel mixer or the like, the mixture is heated, pressurized, and melted by an extruder under the condition that the mixture is not foamed to obtain strands through dies, and the strands are cut into pellets. The pellets are charged into, for example, an extruder at a different place, are heated at a high temperature, and pressurized and melted to be extruded through dies having a desired shape to obtain a foam. Further, after a starch powder or starch granules, a synthetic resin, an alkaline compound, water, and the components added as necessary such as a surfactant, an inorganic filler, and the like are mixed by a Henschel mixer or the like, water is poured into an extruder at the time of kneading the mixture by an extruder, the mixture is extruded through dies having a desired shape, while being foamed to obtain a foam. Therefore, the foamable resin composition of the present invention includes those prepared using water as a starting material, those prepared by adding water at the kneading step by an extruder, and those prepared by adding an aqueous solution prepared by dissolving the alkaline compound at the kneading step by an extruder.
Further, foamable pellets prepared by formulating components other than water, immersing the formulation in water and foaming the same, pellets comprising water but obtained under the condition that the pellets are not foamed, and pellets immersed in water can be formed into various foams using molds. The foamable resin composition of the present invention thus also includes a composition obtained by impregnating pellets with water later.
The alkaline compound and water may be used separately, or an aqueous solution of the alkaline compound dissolved in water may be used.
The foamable resin composition of the present invention formed into expanded foam may be preferably used as a cushioning material.
In general, the heating temperature at the molding step is preferably a temperature around the melting point of the synthetic resin.

The shape and application of the foam obtained by using the foamable resin composition of the present invention are not particularly limited. The foamable resin composition of the present invention can be formed into sheets, films, containers, and the like by extrusion molding, blow molding, foam molding in a mold, injection molding, or the like.

### EXAMPLES

The present invention will be specifically explained with reference to the Examples, but is not limited thereto.
The materials used in the Examples are as below.

### [Starch]

Corn starch (manufactured by Oj i Corn Starch Co., Ltd., trade name of corn starch, unmodified starch, moisture content of about 8.5 wt%), cationic starch (manufactured by Oji Corn Starch Co., Ltd., Ace K100, moisture content of about 10 wt%)

### [Synthetic resin]

Aliphatic polyester (manufactured by SHOWA HIGHPOLYMER CO., LTD., trade name of Bionolle (registered trademark) #1010, MFR 10 g/(190°C, 10 minutes))

### [Alkaline compound]

Sodium hydrogen carbonate (manufactured by Asahi Glass Co., Ltd.), sodium sesquicarbonate (manufactured by FMC Corporation)

### [Surfactant]

Glyceryl monostearate (manufactured by Kao Corporation, trade name of RHEODOL (registered trademark) MS-165V)

### [Inorganic filler]

### Calcium carbonate

Components other than water were pre-mixed at the ratio shown in Table 1 using a Henschel mixer. The mixture was charged into a same direction twin-screw extruder. Water at the ratio shown in Table 1 was poured into the anterior half of the cylinder of the extruder. The resulting mixture was extruded and was foamed to obtain a foam. The cylinder temperature in the process was 190°C. The obtained foam was cut into cylindrical foams. The moldability of Examples 1 to 9 and Comparative example 2 at the extrusion and foaming steps was excellent, but the moldability of Comparative example 1 was poor.

### <Evaluation of cushioning property>

Cushioning properties were evaluated as follows. Cylindrical foams that flexibly deformed upon application of a force thereto and immediately returned to the original shape upon removal of the force and in which most of the foamed cells were not destroyed after this procedure was repeated were evaluated as ⊚. Cylindrical foams that flexibly deformed upon application of a force thereto and immediately returned to the original shape upon removal of the force but in which the foamed cells were gradually destroyed after this procedure was repeated were evaluated as ○. Cylindrical foams that flexibly deformed upon application of a force thereto but did not immediately return to the original shape upon removal of the force and in which the foamed cells were destroyed after this procedure was repeated were evaluated as x.

[Table 1]

**Table**

| | Example 1 | Example 2 | Example 3 | Example 4 | Example 5 | Example 6 | Example 7 | Example 8 | Example 9 | Comparative example 1 | Comparative example 2 |
|---|---|---|---|---|---|---|---|---|---|---|---|
| Corn starch [parts by weight] | 100 | | 100 | 100 | 100 | 100 | | 60 | 100 | 100 | 70 |
| Cationic starch [parts by weight] | | | | | | | 100 | 40 | | | |
| Corn grits [parts by weight] | | 100 | | | | | | | | | |
| Bionolle #1010 [parts by weight] | 5 | 5 | 5 | 5 | 5 | 5 | 3 | 3 | | 5 | 30 |
| Polypropylene [parts by weight] | | | | | | | | | 7 | | |
| Water [parts by weight] | 10 | 10 | 10 | 10 | 10 | 10 | 10 | 10 | 10 | 10 | 10 |
| Sodium hydrogen carbonate [parts by weight] | 0.2 | 0.3 | 0.3 | 0.5 | | 0.3 | 0.1 | 0.1 | 0.5 | | |
| Sodium sesquicarbonate [parts by weight] | | | | | 0.3 | | | | | | |
| RHEODOL MS-0165V [parts by weight] | | | | | | 0.08 | | | | | |
| Calcium carbonate | 1.5 | 1.5 | 0.5 | 1.5 | 1.5 | 1.5 | 1.5 | 1.5 | 1.5 | 1.5 | 1.5 |
| Evaluation of cushioning properties | ⊚ | ⊚ | ○ | ○ | ○ | ⊚ | ⊚ | ⊚ | ○ | x | ⊚ |

## Claims

1. A foamable resin composition comprising starch, a synthetic resin, an alkaline compound, and water in an amount of 10 to 40 parts by weight with respect to 100 parts by weight of the starch, wherein the synthetic resin content is 0.02 to 10 wt%.

2. A foamable resin composition according to Claim 1, further comprising a surfactant.

3. A foamable resin composition according to Claim 1 or 2, wherein the alkaline compound is at least one compound selected from the group consisting of an alkali metal hydrogen carbonate, an alkali metal carbonate, an alkali earth metal hydrogen carbonate, and an alkali earth metal carbonate.

4. A foamable resin composition according to any one of Claims 1 to 3, wherein the alkaline compound content is 0.05 to 1 wt%.

5. A foamable resin composition according to any one of Claims 1 to 4, wherein the synthetic resin is at least one resin selected from the group consisting of aliphatic polyesters, polylactic acid, and polyolefin resins.

6. A foamable resin composition according to any one of Claims 1 to 5, wherein the starch is natural starch.

7. A foam obtained by foaming the foamable resin composition according to any one of Claims 1 to 6.

8. A foam according to Claim 7, wherein the foam is expanded foam.
